# EUROPEAN PATENT SPECIFICATION

(11) **EP 2 829 914 B1**
(45) Date of publication and mention of the grant of the patent: **11.03.2020**
(21) Application number: 14178039.5
(22) Date of filing: 22.07.2014
(51) Int. Cl.: A63J 5/02, G03B 21/56

(54) **Supporting and tensioning group for a projection screen and projection assembly using the same**
Unterstützung und Spannelement für einen Projektionsschirm und eine diese beinhaltende Projektionseinheit
Groupe de soutien et de tension pour un écran de projection et assemblage de projection comprenant le même

(30) Priority: 24.07.2013 IT MI20131243
(43) Date of publication of application: 28.01.2015
(73) Proprietor: Emmegi Sistemi di Comunicazione S.r.l., 20014 Nerviano (MI) (IT)
(72) Inventor: Parini, Mario, I-20040 Nerviano (MI) (IT)
(74) Representative: Di Bernardo, Antonio

(56) References cited:
- WO-A1-2005/096095
- GB-A- 2 437 928
- US-A- 5 982 537
- US-A1- 2005 041 012
- US-A1- 2007 121 088

## Description

The present invention refers to a supporting and tensioning group for a projection screen easy to assemble and to a projection assembly using the same.

The observation of a virtual image obtained by reflection of a projection on a partially reflective and partially transparent screen by an audience placed in front of the screen is known as Pepper's ghost illusion technique.

In particular, according to a preferred embodiment of the said technique, the screen is in a tilted position with respect to the direction of incidence of the projection thereon in order to give depth to the virtual image, providing a three-dimensional aspect thereof.

An element of absolute relevance in order to obtain an effect of realistic projection lies in the tensioning of the screen, which is preferably constituted by a film made of flexible material.

In case the screen has big dimensions, for example for use on a stage, the assembling of the film results to be quite difficult, leading often to a non-uniform tensioning and thus to the formation of wrinkles on the film which can cause a distortion of the virtual image.

Even in case of perfectly uniform initial tensioning, modifications of temperature or humidity or, more in general, a subsidence over the time of the film subjected to tensioning may lead to the formation of wrinkles.

Supporting and tensioning systems for projection screens are known, which provide to fasten the screen to a tilted frame through, for example, a sandwich coupling of the lateral peripheral portions of the film, being each locked respectively between two lateral longitudinal plates of a frame and possibly pierced to allow the passage of tightening bolts through the two plates and the film. Such kind of supporting and tensioning systems are known from WO 2005/096095. Alternatively, other known supporting and tensioning systems provide to join by means of welding or gluing the lateral peripheral portions of the film, each respectively to a lateral bar of the frame. Such kind of supporting and tensioning systems are known from WO 2009/136170.

In both such systems, once the film is mounted on the frame, said film results subjected to a pre-established initial tensioning which can no longer be modified, except for local variations generally of minor entity.

For the purpose of local modifications of the initial tensioning, the known systems make use of flexible tensioners, such as belts coupled to ratchet tensioners or to clasp devices for blocking friction and so on. A system making use of flexible tensioners is described in document WO 2005/096095.

The Applicant realized that the known supporting and tensioning systems for projection screens require a considerable installation time due to the complexity of the fastening systems provided.

The Applicant has moreover observed that the known supporting and tensioning systems for projection screens are not capable to act uniformly and contemporaneously on the whole width of the screen in order to balance a global yielding of the film, for example, a structural yielding or due to modifications of temperature and/or humidity. Through the known systems a global yielding of the film can be balanced univocally through a local adjustment of the single flexible tensioners, requiring therefore a considerable time and huge difficulty to set the optimal adjustment of each single tensioner.

The Applicant has moreover realized that the use of flexible tensioners for the local modification of tensioning does not ensure to maintain over the time the action of adjustment of the necessary tensioning, being themselves generally also subjected to yielding.

Therefore, the problem at the base of the invention is that to overcome the above mentioned drawbacks, in particular providing a supporting and tensioning group for a projection screen which allows an easy assembling of the screen thereon, thereby reducing the possibility to obtain an non-uniform initial tensioning.

More in particular, the problem at the base of the present invention is that to achieve a supporting and tensioning group for a projection screen which allows to uniformly and simultaneously remedy possible yielding on the whole width of the screen, maintaining it over the time homogeneously tensioned and free of wrinkles. The present invention has moreover the objective to conceive a supporting and tensioning group for a projection screen capable to locally vary the tensioning of the screen, reliably maintaining over the time the corrective results as set.

Last but not least, the problem underlying the present invention is moreover that of supplying a projection assembly which can be quickly installed with an accurately tensioned screen.

Therefore, in the more general terms, the present invention refers, in a first aspect, to a supporting and tensioning group for a projection screen according to claim 1, and in a second aspect, to an assembly of projection according to claims 14 or 15. The preferred features are indicated into the dependent claims.

More in particular, the invention provides a supporting and tensioning group for a projection screen comprising a frame provided with at least one pair of lateral supports, said lateral supports comprising respective opposing lateral support bars, a winding tube for the screen being constrained to each lateral support bar, wherein at least one winding tube is constrained to the respective lateral support bar so as to be able to rotate about its own axis, characterized in that the axis of the at least one winding tube is parallel to the extension of the respective lateral support bar.

In this way it is possible to mount the screen on the frame very quickly. It is indeed only necessary to operate a couple of windings of the peripheral ends of the film about the winding tubes so that it results firmly constrained thereto. Afterwards, to set the initial tensioning of the screen, it is sufficient to act on the rotary tube by rotation thereof until reaching the desired tensioning. It is therefore possible to globally and uniformly act on the whole width of the screen through a single operation, reducing in this way the time and complexity of initial installation. Moreover, the arrangement of the winding tubes parallel to the lateral support bars allows to easily hide such winding tubes to the view of the audience, for example through the curtains usually already present in theatres.

Moreover, the winding tubes placed laterally make easier the access to the same by operators, for possibly making a local tensioning of the screen or other required operations.

This construction form of the supporting and tensioning group for a projection screen can be further improved through the following additional features which can be combined with each other as desired.

According to a preferred embodiment of the present invention, the at least one rotary winding tube is constrained to the lateral support bar through a pair of support brackets, between the at least one rotary winding tube and the support brackets being interposed a pair of flanges or plates, of which a first flange is integral with the rotary winding tube and a second flange is constrained to the respective support bracket, the pair of flanges being capable to take up a first configuration in which they are free to rotate relative to each other and a second configuration of firm locking to relative rotation of the same.

According to a preferred alternative embodiment of the present invention, the at least one rotary winding tube is constrained to the lateral support bar through a pair of support brackets, between the at least one rotary winding tube and the support brackets being interposed a first flange or plate integral to the rotary winding tube, inside the respective support bracket, a second flange or plate being constrained, wherein the first and the second flange can assume a first configuration, in which they are free to rotate relative to one another and a second configuration of firm locking to relative rotation of the same.

In that way, the rotary winding tube can be easily and quickly brought into a configuration of firm lock to the rotation, ensuring that the involved forces due to tensioning do not cause a counter-rotation of the winding tube and thus a tensioning loss of the screen.

In particular, the second flange is slidably constrained to the respective support bracket in order to allow a substantially parallel approaching/departure of the winding tube relative to the respective lateral support bar.

It results thus possible to set both an initial relative position between the winding tube and the respective support bar such as to determine the desired tensioning, while providing room for a local setting, and also not preventing said local setting. Still more in particular, the support brackets comprise a flat portion provided with a longitudinal hole extending orthogonally with respect to the extension of the lateral support bar, the second flange being engaged with at least a bolt or guide pin passing through the longitudinal hole to achieve a translational guide along the longitudinal hole.

Said embodiment results to be a particularly simple solution which ensures a substantially parallel approaching/departure of the winding tube relative to the respective support bar.

Still more preferably, rotation guiding elements are provided comprising a plate integral to the respective support bracket and parallel to the flat portion thereof, wherein the plate is provided with a central threaded hole in which is engaged a rotation guide shaft, said rotation guide elements being capable to assume a first configuration in which the rotation guide shaft is fastened to the threaded hole and engaged idle with a central hole of the flanges, in order to guide the relative rotation.

Preferably, the rotation guide elements can assume a second configuration in which the rotation guide shaft is removed from the idle engagement with the flanges, in order to allow the translation of the flanges along the longitudinal hole. In that way it is obtained in a simple and functional manner a valid guide to rotation of the winding tubes, preferably of the removable type.

According to a second preferred embodiment of the present invention, the rotary winding tube is coupled to rotation control means.

In particular, the rotation control means allow to easily adjust the tensioning uniformly on the whole width of the screen through a single centralized drive.

Said centralized rotation control means can be of the manual or, preferably, of the motorized type.

Preferably, the rotation control means are of the manual type and comprise a pair of opposing holes obtained at the ends of the at least one rotary winding tube and facing each other.

Preferably, the rotation control means are of the motorized type and are arranged coaxial to the winding tube, not requiring specific gear for transmitting motion.

Still more preferably, the motorized rotation control means are arranged inside the winding tube, requiring therefore minimum encumbrances.

Advantageously, the motorized rotation control means provide a further aid, since they autonomously exert the necessary force to impart the required tensioning. According to a further preferred embodiment of the present invention, it is provided at least a local tensioning means of the screen arranged along the extension of said lateral support bar.

In addition to the uniform and contemporaneous tensioning control on the whole screen, it results therefore advantageously possible to locally act in order to remedy tensioning imperfections or localized subsidence.

Preferably, the local tensioning means have a stiff structure.

More preferably, the local tensioning means comprise a U-shaped bar comprising a first free stem embracing the winding tube and a second free stem embracing the support bar through interposition of an adjustable spacer.

Said specific embodiment of the tensioning means ensures that the exerted action is reliably maintained over the time. The stiff structure of the tensioning means indeed minimizes possible subsidence of the local tensioning means.

Still more preferably, the local tensioning means comprise a connecting portion between the two stems provided with an interface for fastening to the support bar. In this way it is possible to achieve a steady and stable constraint between the local tensioning means and the support bar.

Still more preferably, the interface for fastening to the support bar comprises a slot which engages with at least one element for fastening to the support bar to allow the fastening between the bar and the bracket at a variable relative position.

In this way it is possible to set an initial relative position between the local tensioning means and the support bar which on one side determines the desired initial tensioning and on the other still provides wide room for adjustment in case it resulted necessary to balance possible localized subsidence.

According to an alternative preferred embodiment, the local tensioning means comprise a bracket having a first end adapted to engage with the winding tube, preferably hook-shaped, and a second end shaped in the form of adjustable spacing means, preferably made in the form of a threaded stem coupled to a bolt, adapted to cooperate with a first element which can be constrained to a first portion of the lateral support bar so as to translate with respect to the first constraining element.

More preferably, the threaded stem present at the second end of the bracket is slidably engaged in a hole achieved in the first constraining element and the relative sliding stroke between said two elements is limited by the bolt.

More preferably, it is provided a second element which can be constrained to a second portion of the support bar wherein the second constraint element comprises a guide slot in which the bracket is inserted.

Still more preferably, the bracket comprises at least a stiffening rib extending along at least part of its main extension and the guide slot shows a cross-shaped conformation or a conformation in the shape of a plurality of crosses adapted to enable the insertion of the bracket provided with at least one rib.

According to another preferred embodiment of the present invention, the winding tubes comprise each engaging means of a peripheral portion of the screen.

In this way, it is possible to preliminary secure in place the screen to the winding tube before proceeding to the first windings which then determine the stable constraint between said elements. The operation for achieving the first windings is in this way facilitated.

Preferably, the retention means comprise a longitudinal recess achieved on the winding tube extending substantially along the whole extension and parallel to the axis thereof, wherein the longitudinal recess is adapted to house and retain a shaft with a length substantially equal to the length of the recess.

Such a particularly simple achievement of the screen engaging means on the winding tube is particularly advantageous in that it allows to secure in place the screen quickly and simply.

The invention provides moreover a first projection assembly for creating a virtual image comprising
- a supporting and tensioning group according to the first aspect of the invention as above reported;
- a screen between the opposing support bars, tensioned between the winding tubes in a tilted configuration with respect to the support plane of the frame, between an upper end height and a lower end height;
- a reflective surface placed on a plane having a height substantially equal to or lower than the lower end height of the screen; and
- a projector arranged hanging at a height substantially equal to or higher than the upper end height of the screen, the support bars being arranged so that the upper end of the screen faces the projector, said projector being configured so as to project towards the reflective surface.

Analogously, the invention provides a second projection assembly for creating a virtual image comprising
- a supporting and tensioning group according to the first aspect of the invention as above reported;
- a screen between the opposing support bars, tensioned between the winding tubes in a tilted configuration with respect to the support plane of the frame between an upper end height and a lower end height;
- a reflective surface arranged hanging at a height substantially equal to or higher than the upper end height of the screen; and
- a projector placed on a plane having a height substantially equal to or lower than the lower end height of the screen, the support bar being arranged so that the lower end of the screen faces the projector, the projector being configured so as to project towards the reflective surface.

Advantageously, in the second projection assembly for creating a virtual image the reflective surface is arranged in a position fully hindered to the view of the audience.

Both these construction forms of the projection assembly can be further improved through the additional features which can be combined with each other as desired, as formerly illustrated in relation to the supporting and tensioning group for a projection screen which, in the specific application, lead to the same advantages. Moreover, the assembly constituted by the projector and by the reflective surface can be substituted by another means suitable for the formation of an image, for example a non-reflected light source, which directly sends the image towards the projection screen. Such a source may for example comprise a LCD screen, a plasma screen, a so-called led-wall screen or the like, substantially arranged in the position provided for the reflective surface.

Further features and advantages of the present invention will result clearer from the following description detailed with some of its preferred embodiments, made with reference to the attached drawings. The different features in the single embodiments can be combined with each other as desired according to the previous description, in case one is willing to avail oneself of the advantages specifically resulting from a particular combination.

In such drawings,
- figures 1a and 1b are perspective views respectively from the back and front of a preferred embodiment of the supporting and tensioning group for a projection screen according to the present invention;
- figure 2 is a first enlarged detail of the supporting and tensioning group for a projection screen of figures 1a and 1b;
- figure 3 is a portion of the detail of figure 2 in exploded configuration;
- figure 4 is a second enlarged detail in exploded configuration of the supporting and tensioning group for a projection screen of figure 1;
- figure 5 is the detail of figure 4 in assembled configuration;
- figure 6 is a perspective view of an alternative embodiment of the detail of figures 4 and 5;
- figure 7 is a perspective view of an embodiment of a projection assembly using a supporting and tensioning group for a projection screen according to the present invention;
- figure 8 is a perspective view of another embodiment of a projection assembly using a supporting and tensioning group for a projection screen according to the present invention;
- figure 9 is a front perspective view of a further preferred embodiment of the supporting and tensioning group for a projection screen according to the present invention;
- figure 10 is a enlarged detail of the supporting and tensioning group for a projection screen of figure 9;
- figures 11 and 12 are part of the detail of figure 10 in exploded configuration.

In the following description, for the illustration of the figures, identical reference numbers are used to indicate constructive elements with the same function.

With reference to the figures, it is illustrated a supporting and tensioning group for a projection screen, wholly indicated through 10.

The supporting and tensioning group 10 comprises a frame 11 provided with at least a pair of lateral supports 12,12'; the lateral supports 12,12' comprise respective opposing support bars 13,13', tilted with respect to the support plane of the frame 11, to which fastening means 14 of a screen 20 are constrained. The support bars 13,13' are lateral.

The screen 20 is preferably made of a polymeric film possibly coated on one side by a partially reflective layer.

The support bars 13,13' are arranged spaced and parallel with each other so that the screen 20 can underlie between them and form a surface tilted with respect to the support plane of the frame 11.

Preferably the support bars 13,13' are tilted by 45° with respect to the support plane of the frame 11.

In a preferred embodiment, not illustrated, the lateral supports 12,12' comprise means for adjusting the inclination of the support bars 13,13' adapted to confer to the support bars 13,13' the most appropriate inclination to the specific application. The lateral supports 12 are preferably provided at the bottom with a plurality of rise columns 21 adapted to maintain raised the support bars 13 of the frame 11, and therefore the screen 20 itself, once put into operation, with respect to the support plane of the frame 11.

It is moreover preferably provided a truss 22 of extension for the support and/or the connection of the tilted support bars 13,13' of the frame 11 respectively to the support plane of the same 11 and/or to an upper surface, such as for example a ceiling of an auditorium.

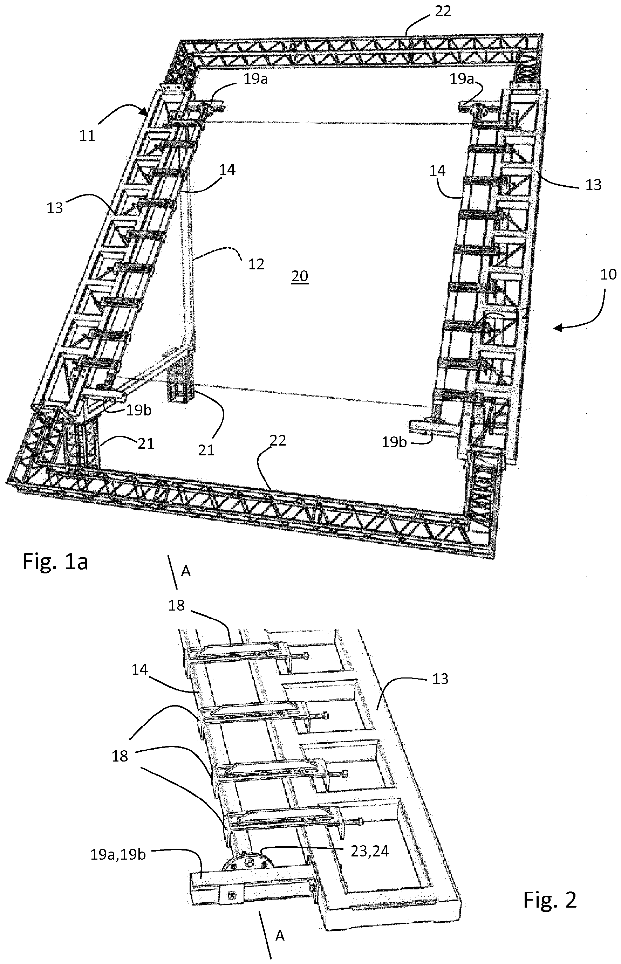

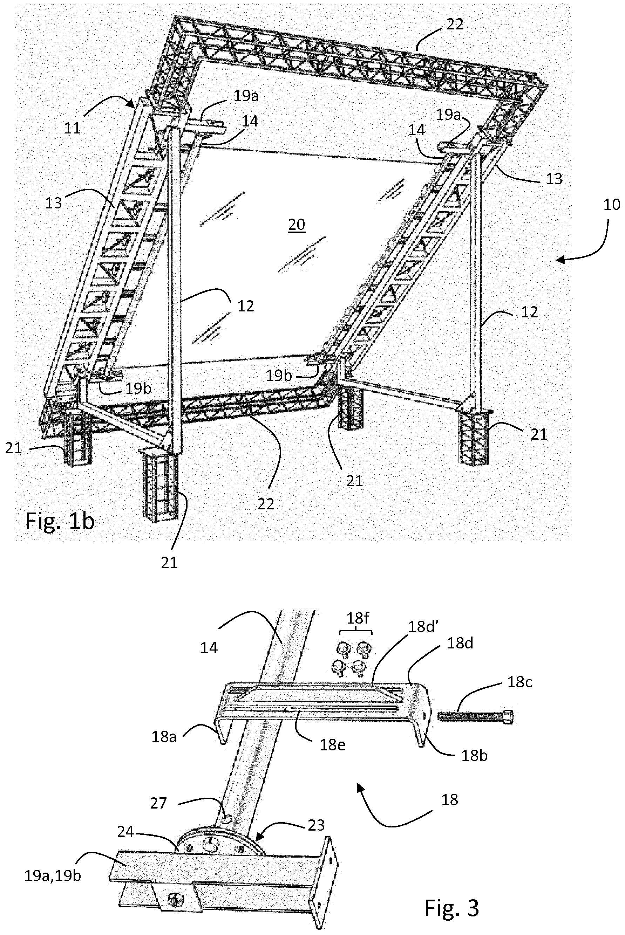

In the examples illustrated in figures 1-8, the lateral supports 12 and the lateral support bars 13 are achieved in form of tubular structures.

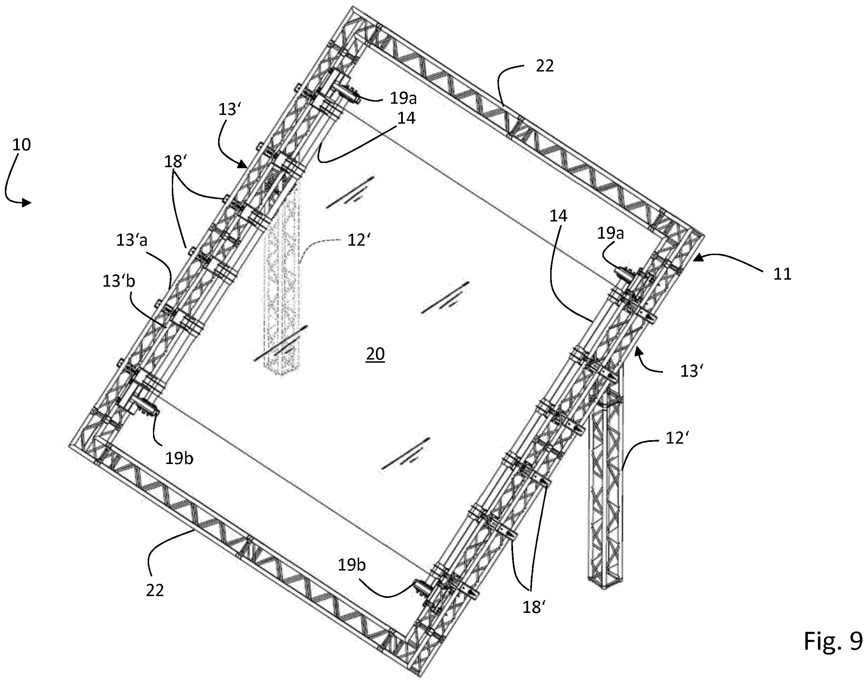

In the example illustrated in figure 9, the lateral supports 12' and the lateral support bars 13' are achieved in the form of a truss structure.

According to the present invention, the fastening means 14 of the screen comprise a pair of winding tubes 14 having an extention axis A on which the lateral peripheral portions of the screen 20 are wound, in order to achieve a firm constraint to such winding tubes 14.

Each winding tube 14 is constrained to the respective support bar 13,13' so that the axis of the winding tube 14 is substantially parallel to the extention of the respective lateral support bar 13,13'.

In the illustrated example, the winding tubes 14 are constrained to the respective lateral support bars 13,13' through a pair of support brackets 19a,19b of which an upper support bracket 19a is arranged substantially at an upper end and a lower support bracket 19b is arranged substantially at a lower end of the support bar 13,13'.

In a fully similar manner, in case of a winding tube 14 having an extension lower than that of the support bars 13,13', the support brackets 19a, 19b are arranged at central portions of the support bar 13,13', with the upper support bracket 19a in a position close to the upper end and the lower support bracket 19b in a position close to the lower end of the support bar 13,13'.

Both the support brackets 19a,19b protrude orthogonally with respect to the extension of the support bar 13,13' inside the supporting and tensioning group 10, therefore in the direction of the further support bars 13,13'.

At least one of the winding tubes 14 is constrained to the respective support bar 13,13' rotatably about its own axis A in order to allow an adjustment of the screen portion 20 wound about it.

The rotary coupling between the winding tube 14 and the support bar 13 is for example obtained interposing between the winding tube 14 and the support brackets 19a,19b a pair of flanges or plates 23,24 as illustrated in figures 3-4, of which a first flange 23 is integral with the winding tube 14 and a second flange 24 is constrained to the respective support bracket 19a, 19b, wherein the two flanges 23,24, during tensioning, are free to rotate relative to one another.

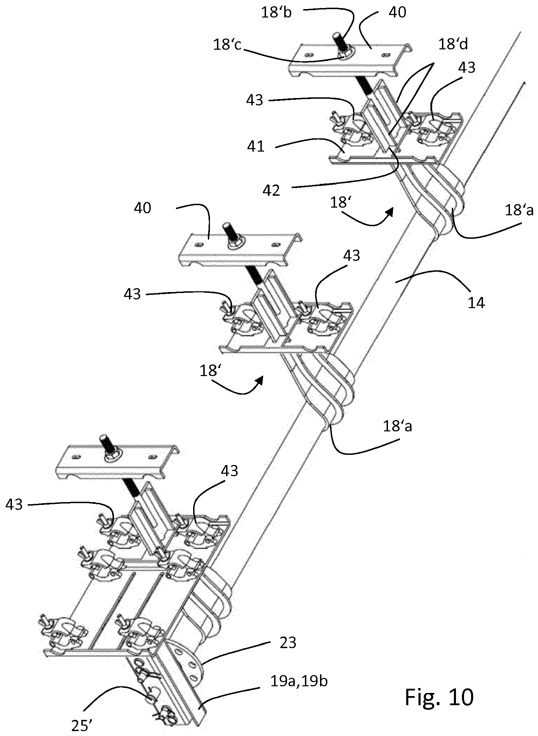

In the embodiment illustrated in figures 10-12, the second flange or plate 24' constrained to the respective support bracket 19a, 19b is achieved in the shape of lateral surface 24' of a tubular element 45 with a substantially square section, inserted into the respective support bracket 19a, 19b in such a way that the surface 24' of the tubular element 45 is substantially in abutment against the flat portion 19c of the support brackets 19a,19b. In this embodiment, the first flange or plate 23 integral with the winding tube 14 is directly in abutment against the respective support bracket 19a, 19b, which is in turn interposed between the first 23 and the second 24' flange.

According to a preferred embodiment, not illustrated, the rotary winding tube 14 is coupled to rotation control means, preferably of the motorized type. In said not illustrated embodiment, the motorized rotation control means are arranged coaxially to the winding tube 14 an preferably housed inside the same 14. The motorized control means are firmly constrained to the respective support bar 13,13', for example through a firm connection to the lower support bracket 19b, and coupled to the respective winding tube 14 so as to impart to the same a rotary movement.

Alternatively to the motorized control means, in the illustrated embodiment manual control means are provided.

In said embodiment, the manual control means comprise at least a pair of opposing holes 27 achieved at the ends of the rotary winding tube 14 and facing each other in a way to enable the insertion of a lever (not illustrated) to impart to the rotary winding tube 14 a manual rotation command and thus to obtain the winding of the screen 20 about it 14.

For keeping stable the angular position achieved through the motorized or manual rotation command imparted, the two flanges 23,24;23,24' are preferably provided with an interface of mutual connection 31,32 which, in the illustrated embodiments, is made of a plurality of holes 31 in which bolts or block pins 32 can be inserted.

Local tensioning means 18,18' of the screen 20 are also provided, illustrated in detail in figures 2-3 and 10-11, arranged along the extension of the support bar 13,13' which allow to make a fine adjustment of the initial tensioning, acting locally on a restricted area of the winding tube 14 and thus of the screen 20.

The local tensioning means 18,18' are preferably of the stiff type.

In the embodiment illustrated in figures 2 and 3, the local tensioning means 18 comprise a U-shaped bracket 18 comprising a first free stem 18a embracing the winding tube 14, a second free stem 18b embracing the support bar 13 through interposition of adjustable spacing means 18c, and a connecting portion 18d between the two stems 18a,18b provided with at least one slot 18e which engages a plurality of fastening elements 18f to the support bar 13 to allow the fastening between the bar 13 and the bracket 18 at an adjustable relative position.

Acting on the spacing means 18c, for example achieved in the form of screw coupled to a threaded hole achieved in the second free stem 18b of the U-shaped bracket 18, it is possible to vary the spacing between the second free stem 18b and the support bar 13, obtaining a local approaching of the winding tube 14 to the support bar 13.

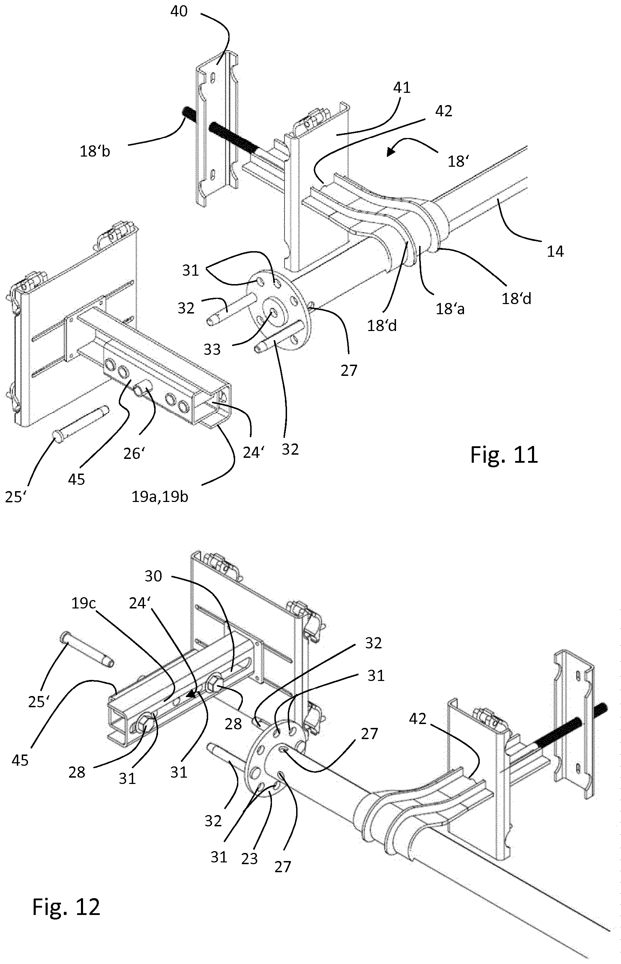

In figures 10 and 11 is illustrated a second embodiment of the local tensioning means 18' particularly suitable for use with lateral support bars 13' achieved in the form of a truss structure, such as those illustrated in figure 9.

Said local tensioning means 18' comprise a bracket having a first end 18'a adapted to engage with the winding tube 14, for example hook-shaped, and a second end 18'b,18'c in the shape of adjustable spacing means, such as for example a threaded stem 18'b which can be coupled to a bolt 18'c.

It is moreover preferably provided at least a reinforcing rib 18'd extending along at least part of the main extension of the bracket 18'. In the embodiment illustrated in figures 10-12, two reinforcing ribs 18'd are advantageously provided.

The threaded stem 18'b present at the end of the bracket 18' is slidably engaged in a first constraint element 40, for example plate-shaped, adapted to go in abutment against a first portion 13'a of the truss support bar 13', for example an external portion. The sliding stroke of the threaded stem 18'b in the first constraint element 40 is restricted to the bolt 18'c.

Also in this case, acting on the spacing means 18'b, 18'c it is possible to move the bracket 18' with respect to the support bar 13', obtaining a local approach of the winding tube 14 to the truss support bar 13'.

In the specific embodiment of figures 10 and 11, the action on the spacing means 18'b,18'c occurs through screwing of the bolt 18'c on the threaded stem 18'b which determine a sliding of the threaded stem 18'b with respect to the first constraint element 40 and therefore with respect to the support bar 13'.

It is moreover preferably provided a second constraint element 41, for example shaped like a plate or a pair of plates, which can be fastened to a second portion 13'b of the truss support bar 13', for example an internal portion.

In that case, the stem 18' is preferably inserted in a guide slot 42 of the second constraint element 41 to be blocked against rotation about its own axis of main extention.

The guide slot 42 is cross-shaped or has a conformation in the shape of a plurality of crosses, in order to enable the passage of the at least a rib 18'd of the bracket 18' independent from the direction of the assembly of the second constraint element 41.

The second constraint element 41 comprises a plurality of fastening interfaces 43 to the truss support bar 13', for example of the aliscaff type.

The second flange 24,24' is slidably constrained to the respective support bracket 19a, 19b in order to enable an approaching/departure of the winding tube 14 from the support bar 13,13' during the fine adjustment of tensioning.

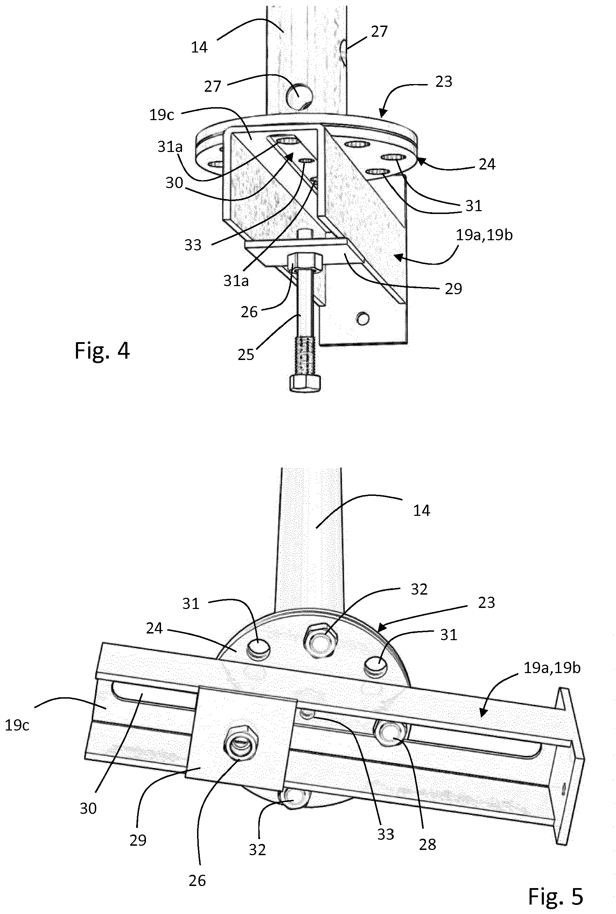

To this end, the flat portion 19c of the support brackets 19a, 19b is provided with a longitudinal hole 30 extending orthogonally with respect to the extension of the support bar 13,13', with which the second flange 24,24' goes in abutment. As derivable from figures 4 and 5, at least one first hole 31a of the plurality of holes 31 of the second flange 24,24' is in engagement with at least a guide bolt 28 passing through the longitudinal hole 30.

From figures 5 and 12 is derived that said guide bolt 28 constrains the second flange 24,24' to the flat portion 19c of the support brackets 19a, 19b while allowing the relative sliding among such surfaces 24,19c;24',19c along the longitudinal hole 30.

In the embodiment illustrated in figures 4 and 5, rotation guide elements 25,26,29 are moreover provided, comprising a plate 29 integral with the support bars 19a,19b and arranged parallel to the flat portion 19c of the same 19a,19b. The plate 29 is provided with a threaded central hole 26 in which a rotation guide shaft 25 goes in engagement.

In a first configuration of installation, the rotation guide shaft 25 is fastened to the threaded central hole 26 and brought into idle engagement with a central hole 33 of the flanges 23,24, in order to guide the relative rotation imparted manually or controlled.

Once the desired angular position has been reached, the rotation guide shaft 25 is removed from the idle engagement with the flanges 23,24, as shown in figure 4, in order to allow an axial translation possibly necessary for a local tensioning.

In that configuration, the winding tubes 14 are held axially from the local tensioning means 18 in order to counteract the force exerted by the tensioning imparted during the first configuration of installation.

In the alternative embodiment illustrated in figures 10 - 12, the rotation guide elements 25',26' comprise a rotation guide pin 25' which is brought into idle engagement with the central hole 33 of the first flange 23 to guide its rotation. The rotation guide pin 25' is inserted and fastened in a seat 26' integral with a second flange 24'. In this way, the rotation guide pin 25' may slide axially with the second flange 24', not being thus necessary to remove it in order to proceed to the local tensioning.

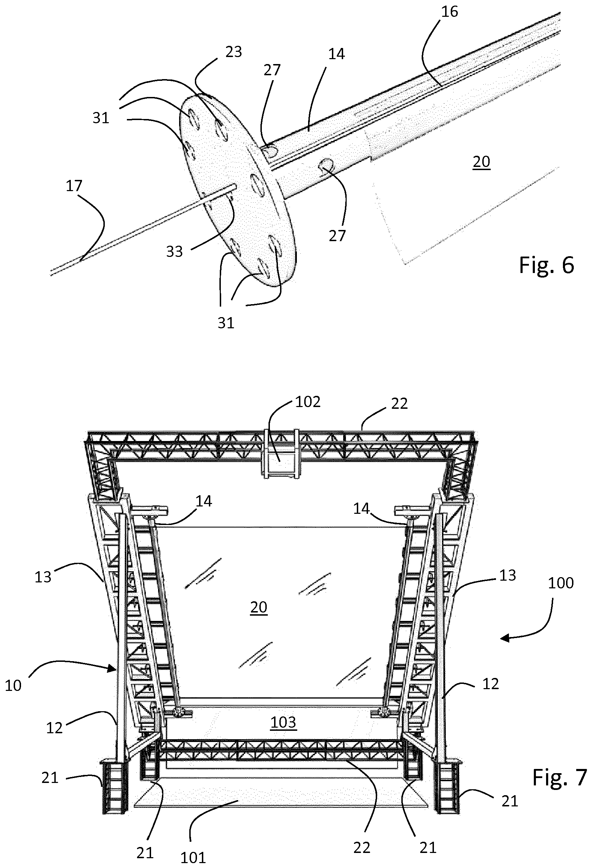

According to the alternative embodiment illustrated in figure 6, the winding tubes 14 comprise engagement means 16,17 of an end of the screen 20 to the winding tube 14, specifically comprising a longitudinal recess16 achieved on the winding tube 14 developing on the whole extension and parallel to the axis A of the same 14, wherein the longitudinal recess 16 is adapted to house and hold, by shape coupling and/or through suitable fastening means (not illustrated), a shaft 17 with a length substantially equal to the length of the recess 16.

In that way it is possible to firmly constrain, to each winding tube 14, a lateral peripheral portion of the screen 20.

Figure 7 illustrates a projection assembly 100 for creating a virtual image which comprises a supporting and tensioning group 10 according to the present invention, thus provided with a frame 11 with a pair of lateral supports 12; the lateral supports 12 comprise respective opposing support bars 13. The support bars 13 are lateral.

The support bars 13 are tilted with respect to the support plane of the frame 11 and, in the specific illustrated embodiment, arranged in such a way that the end terminating at a lower level or height is facing towards a stage 103 placed behind the supporting and tensioning group 10 and is terminating substantially at the same level or height of the stage floor, and the end terminating at higher level is facing towards an auditorium (not illustrated) placed in front of the supporting and tensioning group 10.

Among the support bars 13 underlies a screen 20 which results therefore arranged in a tilted position between a lower end height and an upper end height.

The projection assembly 100 comprises moreover a reflective surface 101, which in said embodiment is placed on the support plane of the frame 11, therefore at a height substantially equal to or lower than the lower end height of the screen 20, and a projector 102 hanging between the lateral supports 12, at a height substantially equal to or higher than the upper height at which the screen 20 terminates.

In the specific embodiment of figure 7, the projector 102 is hanging at the height at which terminates the upper portion of the truss 22 extension.

The arrangement of the reflective surface 101 on the support plane of the frame 11 is preferably such as to enable to vary the inclination thereof with respect to said support plane.

In the embodiment illustrated in figure 7, the plane on which the frame 11 of the supporting and tensioning group 10 and the reflective surface 101 are resting, is placed at a lower height with respect to the floor of the stage 103.

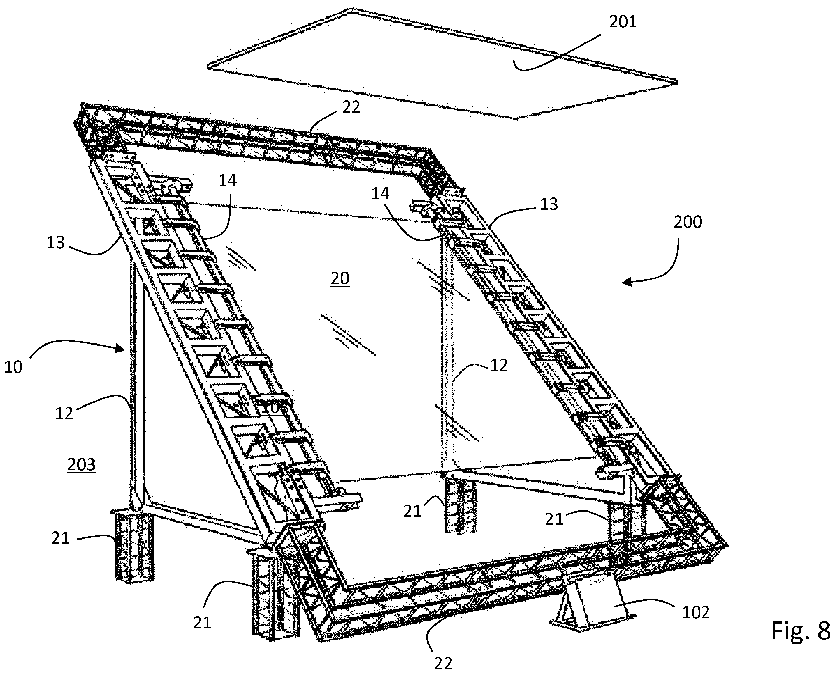

Figure 8 illustrates another projection assembly 200 for creating a virtual image, which comprises a supporting and tensioning group 10 according to the present invention, thus provided with a frame 11 with a pair of lateral supports 12; the lateral supports 12 comprise respective opposing support bars 13. The support bars 13 are lateral.

The support bars 13 are placed in such a way that the end terminating at a lower level is facing towards an auditorium (not illustrated) and the end terminating at a higher level is facing towards a stage 203.

In said embodiment, a reflective surface 201 is placed hanging (on the ceiling or on a suitable support, not illustrated) between the lateral supports 12, at a height substantially equal to or higher than the upper end height of the screen 20, preferably in a way so as to enable to vary the inclination thereof. A projector 202 is placed on a plane placed at a height substantially equal to or lower than the lower end height of the screen 20.

The projector 102 or 202 is configured in a way so as to project, directly or indirectly, towards the reflective surface 101 or 201.

The reflective surface 101, 201 preferably reflects only part of the visual spectrum of the light. Such a surface 101, 201 preferably presents in grey.

In a fully equivalent manner, it can be used, as reflective surface 101, 201, a white panel capable to reflect the whole visual spectrum.

In alternative embodiments, not illustrated in the figures, the assembly formed by the projector 102 or 202 and by the reflective surface 101 or 201 can be substituted by another means suitable for forming the image, for example a non-reflected luminous source, which directly sends the image towards the projection screen. Said source for example can comprise a LCD screen, a plasma screen, a so-called led-wall screen or the like, arranged substantially in the position provided for the reflective surface 101 or 201.

The screen 20 underlying between the straight bars 13 is accurately tensioned through manual action or the action of control means which drive at least one of the two winding tubes 14 in rotation until reaching the desired tensioning.

Likely, the tensioning of the screen 20 is locally controlled through the adjusting action of the local tensioning means 18,18'.

The operation of the supporting and tensioning group 10 of a projection screen is the following.

During installation, the two peripheral lateral portions of the screen 20 are wound each respectively about a winding tube 14. After a couple of windings a stable constraint between the screen 20 and the winding tubes 14 is created.

In case the winding tubes 14 are provided with engaging means 16,17, before carrying out the first constraint windings of the screen 20 about the winding tube 14, the peripheral lateral portions are secured in position through the fitting into the recess 16 of the respective shaft 17.

In that way, the peripheral lateral portion of the screen 20 is brought inside the recess 16 and kept in position by the shaft 17.

At least one of the two winding tubes 14 is therefore put in rotation in order to wind the excess of screen 20 present between the two lateral supports 12 and obtain thus the tensioning of the same 20.

In the illustrated embodiments, the rotation of the rotary winding tube 14 takes place through the insertion into the opposing holes 27 of a lever (not illustrated) facilitating the transfer of a torsion force manually set.

During rotation, the flanges 23,24;23,24' are free to rotate one with each other, the guide elements 25,26,29;25',26' are in the position of idle engagement with the central hole 33 of the same 23,24;23,24'.

The action exerted by the rotation of the winding tubes 14 results uniform on the full height of the screen 20, obtaining thus a uniform initial tensioning in a simple and quick manner.

A possible global subsidence of the screen 20 can be easily and quickly balanced by putting in rotation at least one of the two winding tubes 14 until returning to the initial condition of uniform tensioning.

Once the desired initial tensioning has been achieved, the first flange 23 integral with the rotary winding tube 14 is constrained to the second flange 24;24' by use of at least a pair of bolts or blocking pins 32 in the holes 31 present on both the flanges 23,24;23,24'.

Moreover, along the extension of the winding tubes 14 are positioned local tensioning means 18,18' so as to engage with the same 14 and counteract the axial force exerted by the initial tensioning imparted.

In order to allow a local adjustment of the tensioning exerted through the local tensioning means 18,18', the guide and blocking elements 25,26,29 according to the embodiment illustrated in figures 4 and 5 are brought from the position of idle engagement with the central hole 33 of the flanges 23,24 into a disengagement position.

Said operation does not result necessary with the guide and blocking elements 25',26' according to the embodiment illustrated in figures 11 and 12.

In that configuration, the winding tube 14 is free to slide, under the action of the local tensioning means 18,18', orthogonally with respect to the extension of the support bar 13,13' and therefore in approaching/departure therefrom 13,13' guided from the at least guide bolt 28 put at the longitudinal hole 30 and engaged with one of the holes 31a of the second flange 24;24'.

The local tensioning means 18,18' are used in case it is necessary to act locally on the tensioning of the screen 20.

To this end, by control of the spacers 18c,18'b,18'c it is possible to obtain a local approaching of the winding tube 14 to the straight bar 13,13' and therefore a greater tensioning of the screen 20 in that area.

From the description provided, the features of the supporting and tensioning group of a projection screen of the present invention are clear, as well as the related advantages appear also clear.

Indeed, through the supporting and tensioning group of a projection screen according to the present invention it is possible to put into operation quickly and without troubles the projection screen, avoiding that during the assembling a non-uniform tensioning of the same is created.

It is also possible to balance quickly and with extreme ease both global subsidence of the screen, and possible locally forming wrinkles.

Last but not least, the use of local tensioning means of the type used according to the present invention allows to reliably maintain over the time the adjustment action of the tensioning imparted from the same.

From the above described embodiments possible further variants are possible, without departing from the teachings of the invention as defined by the claims.

For example, the constraint of the screen to the winding tubes can be obtained through a pair of windings or through suitable engaging means, such as the longitudinal recess formed on the winding tubes and adapted to house and hold a shaft through which the screen is intercepted.

Moreover, the rotation control means can be of the motorized or manual type.

It is clear, at last, that the supporting and tensioning group of a projection screen thus conceived can be subjected to numerous modifications and variants, all falling within the scope of the invention as defined by the claims; moreover all the details can be substituted by technically equivalent elements. In practice, the materials used, as well as the dimensions, can be whichever according to the technical requirements.

## Claims

1. Supporting and tensioning group (10) of a projection screen (20) made of a flexible material for obtaining a Pepper's ghost illusion comprising a frame (11) provided with at least one pair of lateral supports (12, 12') placed in a substantially fixed spatial relation one with respect to the other, said lateral supports (12, 12') comprising respective opposing lateral support bars (13, 13'), said lateral support bars (13, 13') being tilted with respect to a support plane of the frame (11) and being spaced apart and parallel with respect to each other, **characterized in that** to and at each lateral support bar (13, 13') a tube (14) for winding said screen (20) is constrained parallel to the extension of said respective lateral support bar (13, 13'), at least one of the tubes being a winding tube (14) being constrained to the respective lateral support bar (13, 13') so as to be able to rotate about its own axis (A) thereby obtaining a tensioning of the flexible screen (20).

2. Supporting and tensioning group (10) according to claim 1, wherein said at least one rotary winding tube (14) is constrained to said lateral support bar (13) through a pair of support brackets (19a, 19b), between said at least one rotary winding tube (14) and said support brackets (19a, 19b) being interposed a pair of flanges (23, 24), of which a first flange (23) is integral with said rotary winding tube (14) and a second flange (24) is constrained to the respective support bracket (19a, 19b), said pair of flanges (23, 24) being able to take up a first configuration in which they are free to rotate with respect to one another and a second configuration of firm locking to relative rotation of the same (23, 24).

3. Supporting and tensioning group (10) according to claim 1, wherein said at least one rotary winding tube (14) is constrained to said lateral support bar (13') through a pair of support brackets (19a, 19b), between said at least one rotary winding tube (14) and said support brackets (19a,19b) being interposed a first flange (23) integral with said rotary winding tube (14), inside the respective support bracket (19a, 19b) a second flange (24) being constrained, said first (23) and second (24) flange being capable to assume a first configuration in which they are free to rotate with respect to one another and a second configuration of firm locking to relative rotation of the same (23,24).

4. Supporting and tensioning group (10) according to claims 2 or 3, wherein said second flange (24) is slidably constrained to the respective support bracket (19a,19b) in order to allow a substantially parallel approaching/departure of said winding tube (14) relative to said lateral support bar (13,13').

5. Supporting and tensioning group (10) according to any one of the claims from 2 to 4, wherein said support brackets (19a,19b) comprise a flat portion (19c) provided with a longitudinal hole (30) extending orthogonally with respect to the extension of said lateral support bar (13,13'), said second flange (24) being engaged with at least a bolt or guide pin (28) passing through said longitudinal hole (30) to achieve a translational guide along said longitudinal hole (30).

6. Supporting and tensioning group (10) according to any of the preceding claims, wherein said at least one rotary winding tube (14) is coupled to rotation control means.

7. Supporting and tensioning group (10) according to claim 6, wherein said rotation control means are of the manual type and comprise a pair of opposing holes (27) obtained at the ends of said at least one rotary winding tube (14) and facing each other.

8. Supporting and tensioning group (10) according to any one of the preceding claims, comprising at least a local tensioning means (18,18') of said screen (20) arranged along the extension of said lateral support bar (13,13').

9. Supporting and tensioning group (10) according to claim 8, wherein said local tensioning means (18,18') comprise a U-shaped bracket (18) comprising a first free stem ('8a) embracing said winding tube (14) and a second free stem (18b) embracing the lateral support bar (13) through interposition of an adjustable spacer(18c).

10. Supporting and tensioning group (10) according to claim 8, wherein said local tensioning means (18,18') comprise a bracket (18') having a first end (18'a) adapted to engage with said winding tube (14) and a second end (18'b,18'c) shaped in the form of adjustable spacing means adapted to cooperate with a first element (40) which can be constrained to a first portion (13'a) of said lateral support bar (13') so as to translate with respect to said first element (40).

11. Supporting and tensioning group (10) according to claim 10, comprising a second element (41) which can be constrained to a second portion (13'b) of said support bar (13'), said second constraint element (41) comprising a guide slot (42) in which said bracket (18') is inserted.

12. Supporting and tensioning group (10) according to claim 11, in which said bracket (18') comprises at least a stiffening rib (18'd) extending along at least part of its main extension, said guide slot (42) showing a cross-shaped conformation or a conformation in the shape of a plurality of crosses adapted to enable the insertion of said bracket provided with at least one stiffening rib (18'd).

13. Supporting and tensioning group (10) according to any one of the preceding claims, wherein said winding tubes (14) comprise each engaging means (16,17) of a peripheral portion of said screen (20).

14. Projection assembly (100) for creating a virtual image **characterized in that** it comprises
- a supporting and tensioning group (10) according to any one of the claims from 1 to 13;
- a screen (20) between said opposing lateral support bars (13,13'), tensioned between said winding tubes (14) in a tilted configuration with respect to the support plane of the frame between an upper end height and a lower end height;
- a reflective surface (101) placed on a plane having a height substantially equal to or lower than said lower end height of said screen (20); and
- a projector (102) arranged hanging at a height substantially equal to or higher than said upper end height of said screen (20), said lateral support bars (13,13') being arranged so that the upper end of the screen (20) faces towards said projector (102), said projector (102) being configured so as to project towards said reflective surface (101).

15. Projection assembly (200) for creating a virtual image **characterized in that** it comprises
- a supporting and tensioning group (10) according to any one of the claims from 1 to 13;
- a screen (20) between said opposing lateral support bars (13,13'), tensioned between said winding tubes (14) in a tilted configuration with respect to the support plane of the frame between an upper end height and a lower end height;
- a reflective surface (201) arranged hanging at a height substantially equal to or higher than said upper end height of said screen (20); and
- a projector (202) placed on a plane having a height substantially equal to or lower than said lower end height of said screen (20), said lateral support bars (13,13') being arranged so that the lower end of the screen (20) faces towards said projector (202), said projector (202) being configured so as to project towards said reflective surface (201).

## Patentansprüche

1. Stütz- und Spanngruppe (10) eines Projektionsschirms (20) aus einem flexiblen Material zur Erzielung einer Pepper's Ghost Illusion umfassend einen Rahmen (11), der mit mindestens einem Paar seitlicher Stützen (12, 12') in einer im Wesentlichen festen räumlichen Beziehung zueinander versehen ist, wobei die genannten seitlichen Stützen (12, 12') jeweils gegenüberliegende seitliche Stützstangen (13, 13') umfassen, wobei die genannten seitlichen Stützstangen (13, 13') in Bezug auf eine Stützebene des Rahmens (11) geneigt sind und beabstandet und parallel zueinander sind, **dadurch gekennzeichnet, dass** an jede und an jeder seitlichen Stützstange (13, 13') ein Rohr (14) zum Wickeln des genannten Schirms (20) parallel zur Erstreckung der jeweiligen seitlichen Stützstangen (13, 13') festgelegt ist, wobei wenigstens eines der Rohre ein Wickelrohr (14) ist, das an der genannten jeweiligen seitlichen Stützstange (13, 13') festgelegt ist, um sich um seine eigene Achse (A) drehen zu können, wodurch eine Spannung des flexiblen Schirms (20) erhalten wird.

2. Stütz- und Spanngruppe (10) nach Anspruch 1, wobei das mindestens eine drehbare Wickelrohr (14) durch ein Paar Stützklammern (19a, 19b) an der seitlichen Stützstange (13) festgelegt ist, wobei ein Paar Flansche (23, 24) zwischen dem mindestens einen drehbaren Wickelrohr (14) und den Stützklammern (19a, 19b) angeordnet ist, von denen ein erster Flansch (23) einstückig mit dem drehbaren Wickelrohr (14) ist und ein zweiter Flansch (24) an der jeweiligen Stützklammer (19a, 19b) festgelegt ist, wobei das genannte Paar Flansche (23, 24) eine erste Konfiguration, in der sie sich frei gegeneinander drehen können, und eine zweite Konfiguration der festen Verriegelung der relativen Drehung derselben (23, 24) einnehmen kann.

3. Stütz- und Spanngruppe (10) nach Anspruch 1, wobei das genannte mindestens eine drehbare Wickelrohr (14) durch ein Paar von Stützklammern (19a, 19b) an der genannten seitlichen Stützstange (13') festgelegt ist, wobei ein erster Flansch (23), der einstückig mit dem genannten drehbaren Wickelrohr (14) ausgebildet ist, zwischen dem genannten mindestens einen drehbaren Wickelrohr (14) und den genannten Stützklammern (19a, 19b) angeordnet ist, wobei ein zweiter Flansch (24) innerhalb der jeweiligen Stützklammer (19a, 19b) festgelegt ist, wobei der genannte erste (23) und der genannte zweite (24) Flansch eine erste Konfiguration, in der sie sich frei gegeneinander drehen können, und eine zweite Konfiguration der festen Verriegelung der relativen Drehung derselben (23, 24) einnehmen können.

4. Stütz- und Spanngruppe (10) nach Anspruch 2 oder 3, wobei der genannte zweite Flansch (24) verschiebbar an der jeweiligen Stützklammer (19a, 19b) festgelegt ist, um ein im Wesentlichen paralleles Annähern/Entfernen des genannten drehbaren Wickelrohrs (14) relativ zu der genannten seitlichen Stützstange (13, 13') zu ermöglichen.

5. Stütz- und Spanngruppe (10) nach einem der Ansprüche 2 bis 4, wobei die genannten Stützklammern (19a, 19b) einen flachen Abschnitt (19c) umfassen, der mit einem Langloch (30) versehen ist, das sich orthogonal zu der Verlängerung der genannten seitlichen Stützstange (13, 13') erstreckt, wobei der genannte zweite Flansch (24) mit mindestens einem Bolzen oder Führungsstift (28) in Eingriff steht, der durch das genannte Langloch (30) verläuft, um eine translatorische Führung entlang des genannten Langlochs (30) zu erzielen.

6. Stütz- und Spanngruppe (10) nach einem der vorhergehenden Ansprüche, wobei das genannte mindestens eine drehbare Wickelrohr (14) mit Drehsteuermitteln gekoppelt ist.

7. Stütz- und Spanngruppe (10) nach Anspruch 6, wobei die genannten Drehsteuermittel vom manuellen Typ sind und ein Paar gegenüberliegender Löcher (27) aufweisen, die an den Enden des genannten mindestens einen drehbaren Wickelrohrs (14) ausgebildet sind und einander gegenüberstehen.

8. Stütz- und Spanngruppe (10) nach einem der vorhergehenden Ansprüche, umfassend mindestens ein lokales Spannmittel (18, 18') des genannten Schirms (20), das entlang der Erstreckung der genannten seitlichen Stützstange (13, 13') angeordnet ist.

9. Stütz- und Spanngruppe (10) nach Anspruch 8, wobei die genannten lokalen Spannmittel (18, 18') einen U-förmigen Bügel (18) umfassen, der einen ersten freien Schenkel ('8a) umfasst, der das genannten Wickelrohr (14) umgibt, und einen zweiten freien Schenkel (18b), der die seitliche Stützstange (13) unter Zwischenschaltung eines einstellbaren Abstandshalters (18c) umgibt.

10. Stütz- und Spanngruppe (10) nach Anspruch 8, wobei die genannten lokalen Spannmittel (18, 18') einen Bügel (18') mit einem ersten Ende (18'a) umfassen, das zum Eingriff mit dem genannten Wickelrohr (14) geeignet ist, und mit einem zweiten Ende (18'b, 18'c), das in Form eines einstellbaren Abstandsmittels geformt ist und geeignet ist, an einem ersten Element (40) zusammenzuwirken, das an einem ersten Abschnitt (13'a) der genannten seitlichen Stützstange (13') festgelegt werden kann, um sich in Bezug auf das erste Element (40) zu verschieben.

11. Stütz- und Spanngruppe (10) nach Anspruch 10, umfassend ein zweites Element (41), das an einem zweiten Abschnitt (13'b) der genannten Stützstange (13') festlegbar ist, wobei das genannte zweite Festlegungselement (41) einen Führungsschlitz (42) aufweist, in den der genannte Bügel (18') eingesetzt ist.

12. Stütz- und Spanngruppe (10) nach Anspruch 11, wobei der genannte Bügel (18') mindestens eine Versteifungsrippe (18'd) aufweist, die sich entlang mindestens eines Teils ihrer Haupterstreckung erstreckt, wobei der genannte Führungsschlitz (42) eine kreuzförmige Gestalt oder eine Gestalt in Form einer Vielzahl von Kreuzen zeigt, die das Einsetzen des mit mindestens einer Versteifungsrippe (18'd) versehenen genannten Bügels ermöglichen.

13. Stütz- und Spanngruppe (10) nach einem der vorhergehenden Ansprüche, wobei die genannten Wickelrohre (14) jeweils Eingriffsmittel (16, 17) eines Umfangsabschnitts des genannten Schirms (20) aufweisen.

14. Projektionsanordnung (100) zum Erzeugen eines virtuellen Bildes, **dadurch gekennzeichnet, dass** sie umfasst
- eine Stütz- und Spanngruppe (10) nach einem der Ansprüche 1 bis 13;
- einen Schirm (20) zwischen den genannten gegenüberliegenden seitlichen Stützstangen (13, 13'), der zwischen den genannten Wickelrohren (14) in einer bezüglich der Stützebene des Rahmens zwischen einer oberen Endhöhe und einer unteren Endhöhe geneigten Konfiguration gespannt ist;
- eine reflektierende Oberfläche (101), die in einer Ebene angeordnet ist, deren Höhe im Wesentlichen gleich oder niedriger als die untere Endhöhe des genannten Schirms (20) ist; und
- einen Projektor (102), der in einer Höhe hängend angeordnet ist, die im Wesentlichen gleich oder höher als die genannte obere Endhöhe des genannten Schirms (20) ist, wobei die genannten seitlichen Stützstangen (13, 13') so angeordnet sind, dass das obere Ende des Schirms (20) dem genannten Projektor (102) zugewandt ist, wobei der genannte Projektor (102) so konfiguriert ist, dass er in Richtung der genannten reflektierenden Oberfläche (101) projiziert.

15. Projektionsanordnung (200) zum Erzeugen eines virtuellen Bildes, **dadurch gekennzeichnet, dass** sie umfasst
- eine Stütz- und Spanngruppe (10) nach einem der Ansprüche 1 bis 13;
- einen Schirm (20) zwischen den genannten gegenüberliegenden seitlichen Stützstangen (13, 13'), der zwischen den genannten Wickelrohren (14) in einer bezüglich der Stützebene des Rahmens zwischen einer oberen Endhöhe und einer unteren Endhöhe geneigten Konfiguration gespannt ist;
- eine reflektierende Oberfläche (201), die in einer Höhe hängend angeordnet ist, die im Wesentlichen gleich oder höher als die genannte obere Endhöhe des genannten Schirms (20) ist; und
- einen Projektor (202), der in einer Ebene mit einer Höhe angeordnet ist, die im wesentlichen gleich oder niedriger als die untere Endhöhe des genannten Schirms (20) ist, wobei die genannten seitlichen Stützstangen (13, 13') so angeordnet sind, dass das untere Ende des Schirms (20) dem genannten Projektor (202) zugewandt ist, wobei der genannte Projektor (202) so konfiguriert ist, dass er in Richtung der genannten reflektierenden Oberfläche (201) projiziert.

## Revendications

1. Groupe de soutien et de tension (10) d'un écran de projection (20) fait d'un matériau souple pour obtenir une illusion de fantôme de Pepper, comprenant un cadre (11) comportant au moins une paire de supports latéraux (12, 12') placés dans une relation spatiale sensiblement fixe l'un par rapport à l'autre, lesdits supports latéraux (12, 12') comprenant des barres de support latérales opposées respectives (13, 13'), lesdites barres de support latérales (13, 13') étant inclinées par rapport à un plan de support du cadre (11) et étant espacées et parallèles l'une à l'autre, **caractérisé par le fait que**, sur et au niveau de chaque barre de support latérale (13, 13'), un tube (14) pour enrouler ledit écran (20) est contraint parallèlement à l'extension de ladite barre de support latérale respective (13, 13'), au moins un des tubes étant un tube d'enroulement (14) qui est contraint à la barre de support latérale respective (13, 13') de façon à être apte à tourner autour de son propre axe (A), obtenant ainsi une tension de l'écran souple (20).

2. Groupe de soutien et de tension (10) selon la revendication 1, dans lequel ledit au moins un tube d'enroulement rotatif (14) est contraint à ladite barre de support latérale (13) par l'intermédiaire d'une paire de paliers de support (19a, 19b), entre ledit au moins un tube d'enroulement rotatif (14) et lesdits paliers de support (19a, 19b) étant interposée une paire de brides (23, 24), dont une première bride (23) est solidaire dudit tube d'enroulement rotatif (14) et une seconde bride (24) est contrainte au palier de support respectif (19a, 19b), ladite paire de brides (23, 24) étant apte à adopter une première configuration, dans laquelle elles sont libres de tourner l'une par rapport à l'autre, et une seconde configuration de verrouillage rigide d'une rotation relative de celles-ci (23, 24).

3. Groupe de soutien et de tension (10) selon la revendication 1, dans lequel ledit au moins un tube d'enroulement rotatif (14) est contraint à ladite barre de support latérale (13') par l'intermédiaire d'une paire de paliers de support (19a, 19b), entre ledit au moins un tube d'enroulement rotatif (14) et lesdits paliers de support (19a, 19b) étant interposées une première bride (23) solidaire dudit tube d'enroulement rotatif (14), à l'intérieur du palier de support respectif (19a, 19b), et une seconde bride (24) qui est contrainte, lesdites première (23) et seconde (24) brides étant capables d'adopter une première configuration, dans laquelle elles sont libres de tourner l'une par rapport à l'autre, et une seconde configuration de verrouillage rigide d'une rotation relative de celles-ci (23, 24).

4. Groupe de soutien et de tension (10) selon la revendication 2 ou 3, dans lequel ladite seconde bride (24) est contrainte de manière coulissante au palier de support respectif (19a, 19b) afin de permettre un rapprochement/éloignement sensiblement parallèle dudit tube d'enroulement (14) par rapport à ladite barre de support latérale (13, 13').

5. Groupe de soutien et de tension (10) selon l'une quelconque des revendications 2 à 4, dans lequel lesdits paliers de support (19a, 19b) comprennent une partie plate (19c) comportant un trou longitudinal (30) s'étendant orthogonalement à l'extension de ladite barre de support latérale (13, 13'), ladite seconde bride (24) étant engagée avec au moins un boulon ou une broche de guidage (28) passant à travers ledit trou longitudinal (30) pour obtenir un guidage en translation le long dudit trou longitudinal (30).

6. Groupe de soutien et de tension (10) selon l'une quelconque des revendications précédentes, dans lequel ledit au moins un tube d'enroulement rotatif (14) est couplé à des moyens de commande de rotation.

7. Groupe de soutien et de tension (10) selon la revendication 6, dans lequel lesdits moyens de commande de rotation sont du type manuel et comprennent une paire de trous opposés (27) obtenus aux extrémités dudit au moins un tube d'enroulement rotatif (14) et se faisant mutuellement face.

8. Groupe de soutien et de tension (10) selon l'une quelconque des revendications précédentes, comprenant au moins un moyen de tension local (18, 18') dudit écran (20) disposé le long de l'extension de ladite barre de support latérale (13, 13').

9. Groupe de soutien et de tension (10) selon la revendication 8, dans lequel ledit moyen de tension local (18, 18') comprend un palier en forme de U (18) comprenant une première branche libre (18a) saisissant ledit tube d'enroulement (14) et une seconde branche libre (18b) saisissant la barre de support latérale (13) par l'interposition d'un élément d'espacement ajustable (18c).

10. Groupe de soutien et de tension (10) selon la revendication 8, dans lequel ledit moyen de tension local (18, 18') comprend un palier (18') ayant une première extrémité (18'a) adaptée pour engager ledit tube d'enroulement (14) et une seconde extrémité (18'b, 18'c) réalisée selon la forme de moyens d'espacement ajustables adaptés pour coopérer avec un premier élément (40) qui peut être contraint à une première partie (13'a) de ladite barre de support latérale (13') de façon à se déplacer en translation par rapport audit premier élément (40).

11. Groupe de soutien et de tension (10) selon la revendication 10, comprenant un second élément (41) qui peut être contraint à une seconde partie (13'b) de ladite barre de support (13'), ledit second élément contraint (41) comprenant une fente de guidage (42) dans laquelle ledit palier (18') est introduit.

12. Groupe de soutien et de tension (10) selon la revendication 11, dans lequel ledit palier (18') comprend au moins une nervure de raidissement (18'd) s'étendant le long d'au moins une partie de son extension principale, ladite fente de guidage (42) présentant une conformation en forme de croix ou une conformation sous la forme d'une pluralité de croix, adaptée pour permettre l'introduction dudit palier comportant au moins une nervure de raidissement (18'd).

13. Groupe de soutien et de tension (10) selon l'une quelconque des revendications précédentes, dans lequel lesdits tubes d'enroulement (14) comprennent chacun des moyens d'engagement (16, 17) d'une partie périphérique dudit écran (20).

14. Ensemble de projection (100) pour créer une image virtuelle, **caractérisé par le fait qu'**il comprend:
- un groupe de soutien et de tension (10) selon l'une quelconque des revendications 1 à 13 ;
- un écran (20) entre lesdites barres de support latérales opposées (13, 13'), mis en tension entre lesdits tubes d'enroulement (14) dans une configuration inclinée par rapport au plan de support du cadre entre une hauteur d'extrémité supérieure et une hauteur d'extrémité inférieure;
- une surface réfléchissante (101) placée sur un plan ayant une hauteur sensiblement inférieure ou égale à ladite hauteur d'extrémité inférieure dudit écran (20); et
- un projecteur (102) disposé en suspension à une hauteur sensiblement supérieure ou égale à ladite hauteur d'extrémité supérieure dudit écran (20), lesdites barres de support latérales (13, 13') étant disposées de telle sorte que l'extrémité supérieure de l'écran (20) est orientée vers ledit projecteur (102), ledit projecteur (102) étant configuré de façon à projeter vers ladite surface réfléchissante (101).

15. Ensemble de projection (200) pour créer une image virtuelle, **caractérisé par le fait qu'**il comprend:
- un groupe de soutien et de tension (10) selon l'une quelconque des revendications 1 à 13;
- un écran (20) entre lesdites barres de support latérales opposées (13, 13'), mis en tension entre lesdits tubes d'enroulement (14) dans une configuration inclinée par rapport au plan de support du cadre entre une hauteur d'extrémité supérieure et une hauteur d'extrémité inférieure;
- une surface réfléchissante (201) disposée en suspension à une hauteur sensiblement supérieure ou égale à ladite hauteur d'extrémité supérieure dudit écran (20) ; et
- un projecteur (202) placé sur un plan ayant une hauteur sensiblement inférieure ou égale à ladite hauteur d'extrémité inférieure dudit écran (20), lesdites barres de support latérales (13, 13') étant disposées de telle sorte que l'extrémité inférieure de l'écran (20) est orientée vers ledit projecteur (202), ledit projecteur (202) étant configuré de façon à projeter vers ladite surface réfléchissante (201).
